# EUROPÄISCHE PATENTANMELDUNG

(11) **EP 4 340 076 A2**
(43) Veröffentlichungstag der Anmeldung: **20.03.2024**
(21) Anmeldenummer: 23182811.2
(22) Anmeldetag: 30.06.2023
(51) Int. Cl.: H01M 8/028, H01M 8/0286

(54) **VERSTÄRKTE DICHTSTRUKTUR FÜR BRENNSTOFFZELLENANWENDUNGEN**

(30) Priorität: 16.09.2022 DE 102022123800
(71) Anmelder: Aerostack GmbH, 72581 Dettingen an der Erms (DE)
(72) Erfinder: ALINK, Robert, 72581 Dettingen an der Erms (DE); DAHL, Karsten, 72581 Dettingen an der Erms (DE)
(74) Vertreter: LKGLOBAL Lorenz & Kopf Patentanwalt Attorney at Law PartG mbB

(57) **Zusammenfassung**

Es wird eine Zelldichtung (10) für eine Brennstoffzelle (100) mit einem Stützabschnitt (11) und einem Dichtungsabschnitt (12) offenbart. Der Dichtungsabschnitt (12) umfasst ein abdichtendes Material. Das abdichtende Material ist konfiguriert, ein Durchtreten eines Fluids zu verhindern. Der Stützabschnitt (11) umfasst ein poröses Material, wie beispielsweise ein Gewebe, und ist konfiguriert, der Zelldichtung (10) eine mechanische Stabilität zu verleihen. Das abdichtende Material des Dichtungsabschnitts (12) durchdringt das poröse Material zumindest teilweise und verbindet so den Dichtungsabschnitt (12) mit dem Stützabschnitt (11). Der Stützabschnitt dient in einer Ausprägung auch dazu, unterschiedliche Dichtbereiche mechanisch miteinander zu verbinden. Ferner wird eine Brennstoffzelle mit einer solchen Zelldichtung (10), wobei die Zelldichtung (10) zwischen zwei Bipolarplatten (111, 112) angeordnet ist, und ein Verfahren (200) zum Herstellen der Zelldichtung (10) offenbart.

## Beschreibung

### TECHNISCHES GEBIET

Die vorliegende Offenbarung bezieht sich auf Dichtungskonzepte im Allgemeinen und im Speziellen auf Dichtungskonzepte für Brennstoffzellenanwendungen.

### TECHNISCHER HINTERGRUND

In Brennstoffzellen bzw. Brennstoffzellenstapeln werden Dichtungen zum Abdichten der einzelnen Medienräume der Zelle selbst zueinander (Brennstoffseite zu Oxidationsmittelseite), der Verteilerleitungen, sowie zur Abdichtung von einzelnen Brennstoffzellen in einem Brennstoffzellenstapel untereinander verwendet. Die Funktion der Dichtung ist dabei insbesondere, interne Leckagen (beispielsweise von der Anodenseite zur Kathodenseite und umgekehrt) und externe Leckagen (beispielsweise zwischen einzelnen Brennstoffzellen in einem Stapel) zu verhindern. In der Regel sind Zelldichtungen aus einem relativ weichen Polymer gefertigt, das sehr biegeschlaff ist. Das Handling beim Einbau, insbesondere beim automatisierten Einbau in Fertigungsanlagen, wird dadurch erschwert. Dieses Problem wird insbesondere durch die signifikant größere laterale Abmessung der Dichtung im Verhältnis zur Dichthöhe (zum Beispiel mehrere Dezimeter im Verhältnis zu unter einem Millimeter) weiter verstärkt, da sich aufgrund der Biegeschlaffheit und herstellungsbedingter Ursachen Unebenheiten in der Dichtung ausbilden können. Durch die Unebenheiten entstehen Probleme vor allem bei der Positionierung der Bauteile relativ zueinander aber auch durch Fehler bei der Positionierung der Dichtung auf den Bauteilen.

Im Stand der Technik sind Dichtungen mit einem Kunststoffrahmen am Rand bekannt, um die Dichtung eben zu bekommen und um die Positionierung der Dichtung relativ zur Bipolarplatte an den Außenkonturen zu ermöglichen. Solche Kunststoffrahmen sind jedoch nur komplex im Mehrkomponenten-Spritzguss herzustellen. Zudem gestaltet sich die Anbindung des Dichtungsmaterials an den Kunststoffrahmen als schwierig und fehleranfällig.

### BESCHREIBUNG

Dementsprechend ist es Aufgabe der Erfindung, eine ebene, stabile, automatisiert herstellbare und montierbare Zellendichtung für Brennstoffzellen zur Verfügung zu stellen.

Diese Aufgabe wird durch eine Zelldichtung gemäß Patentanspruch 1gelöst. Weitere Ausführungsformen ergeben sich aus den abhängigen Ansprüchen sowie aus der folgenden Beschreibung.

Gemäß einem ersten Aspekt wird eine Zelldichtung für eine Brennstoffzelle zur Verfügung gestellt. Die Zelldichtung umfasst einen Stützabschnitt und einen Dichtungsabschnitt. Der Dichtungsabschnitt umfasst ein abdichtendes Material. Das abdichtende Material ist konfiguriert, ein Durchtreten eines Fluids zu verhindern. Der Stützabschnitt umfasst ein poröses Material und ist konfiguriert, der Dichtung eine mechanische Stabilität zu verleihen und die Herstellbarkeit der Dichtung zu verbessern. Das abdichtende Material des Dichtungsabschnitts durchdringt das poröse Material zumindest teilweise und verbindet so den Dichtungsabschnitt mit dem Stützabschnitt.

Die Zelldichtung ist flächig mit oder ohne strukturiertem Profil ausgestaltet und kann grundsätzlich an jeder geeigneten Position in der Brennstoffzelle verwendet werden. Beispielsweise kann die Zelldichtung zwischen der Anodenseiten und der Kathodenseite angebracht sein, um Leckagen zwischen diesen Bereichen zu vermeiden. Gleichzeitig kann die Zelldichtung auch die Verteilerleitungen innerhalb der Brennstoffzelle oder in einem Brennstoffzellenstapel, welche zum Verteilen des Brennstoffs und des Oxidationsmittel auf die jeweiligen Anoden- und Kathodenseiten dienen, abdichten. Im Allgemeinen stellen Dichtungen eine Abdichtung von Fluidströmen durch ein abdichtendes, elastisches Material, wie beispielsweise ein Elastomer, zur Verfügung. Solche Materialien weisen eine relativ hohe Biegeschlaffheit auf. Insbesondere bei Dichtungen mit großer lateraler Abmessung, wie sie in Brennstoffzellen Verwendung finden, kann diese Biegeschlaffheit eine Anordnung und Positionierung der Zelldichtung innerhalb der Brennstoffzelle oder innerhalb des Brennstoffzellenstapels erschweren. Dies ist insbesondere bei der automatisierten Montage abträglich. Unter Biegeschlaffheit soll vorliegend verstanden werden, dass ein biegeschlaffes Material auf Grund seiner Eigenschaften durch sein Eigengewicht oder interne Spannungen deutlich verformt wird, wenn es nicht durch ein weiteres Bauteil gestützt oder gehalten wird.

Die verwendeten Stützabschnitte dienen deshalb zur mechanischen Versteifung der Zellendichtung, beziehungsweise deren Form, und sollen die Elastizität für die Dichtwirkung selbst möglichst wenig beeinträchtigen.

Der Stützabschnitt bietet eine hohe mechanische Biegesteifheit / niedrige Biegeschlaffheit und kann an jeder geeigneten Position im Bereich der Zellendichtung vorhanden sein. Der Stützabschnitt ist dabei mit dem Dichtungsabschnitt fest verbunden und stützt dadurch die Zelldichtung. Der Stützabschnitt kann dabei ein zusammenhängender Bereich sein und beispielsweise um einen Rand der Ebene der Zelldichtung angeordnet sein. Der Stützabschnitt kann jedoch auch lediglich lokal in Bereichen der Zelldichtung vorhanden sein, an denen eine mechanische Versteifung wünschenswert ist, so dass auch mehr als ein Stützabschnitt vorhanden sein kann, wobei diese mehreren Stützabschnitte voneinander beabstandet sein oder auch aneinander angrenzen können. In einer solchen Ausführung können einzelne lokale Stützabschnitte beispielsweise durch einen Dichtungsabschnitt miteinander verbunden sein, wobei mehrere Dichtungsabschnitte auch auf einem Stützabschnitt appliziert sein können und diesen durchdringen. Der Stützabschnitt kann jedoch auch die gesamte Fläche der Zelldichtung einnehmen und Dichtungsabschnitte können an entsprechenden Bereichen, wie weiter unten beschrieben, mit dem Stützabschnitt verbunden sein, bzw. diesen durchdringen, d.h. die Zelldichtung kann auch mehr als einen Dichtungsabschnitt umfassen, welche jeweils mit mindestens einem Stützabschnitt verbunden sind. Der einzelne großflächige Stützabschnitt dient dann also als (poröse) Basisschicht der Zelldichtung. Dadurch kann eine maximale mechanische Unterstützung und eine Materialeinsparung an Dichtmaterial, sowie eine Gewichtsreduzierung erreicht werden.

Insbesondere um die mechanischen Eigenschaften der Dichtung im Dichtbereich durch die Stützstruktur nicht zu beeinträchtigen, können die Dichtungsabschnitte neben dem Stützabschnitt angeordnet sein und mehrere Stützabschnitte verbinden oder diese lateral abschließen. Die Dichtungsabschnitte können aber auch auf dem Stützabschnitt appliziert sein, oder diesen durchdringen und somit mehrere Dichtungsabschnitte auf einem Stützabschnitt angeordnet werden.

Der Dichtungsabschnitt dient der Abdichtung von Fluidleckagen und kann ein zusammenhängender Bereich sein, wie beispielsweise eine Dichtlippe, welche in der Ebene der Dichtung entlang der abzudichtenden Bereiche verläuft. Der Dichtungsabschnitt kann jedoch auch lediglich ein lokal begrenzter Bereich sein, in welchem eine entsprechende Dichtlippe/Dichtung vorhanden ist.

Der Dichtungsabschnitt ist mit dem Stützabschnitt derartig verbunden, dass das abdichtende Material des Dichtungsabschnitts in den Stützabschnitt lokal eindringt und eine mechanische Verbindung / Hinterkrallung ergibt. Der Stützabschnitt ist dazu aus einem porösen Material gefertigt. Das poröse Material umfasst dabei insbesondere eine feste Matrix mit Zwischenräumen, welche durch ein Fluid oder Gas gefüllt werden können. Die feste Matrix kann zum Beispiel ein faserbasierter Werkstoff wie ein Gewebe sein. Das Gewebe umfasst hierbei ein Geflecht oder eine Matrix aus einzelnen Fasern (oder Fasersträngen) eines Gewebematerials. Das abdichtende Material der Dichtungsabschnitte wird dann bei der Fertigung der Zelldichtung, wie weiter unten beschrieben, durch oder auf das poröse Material gespritzt, so dass das abdichtende Material in die Zwischenräume in dem porösen Material hinein oder hindurch reicht und dabei die Zwischenräume zumindest teilweise auffüllt und die feste Matrix des porösen Materials umgibt. Dadurch wird eine feste Verbindung (die als formschlüssige oder materialschlüssige Verbindung bezeichnet werden kann) des abdichtenden Materials (und damit des Dichtungsabschnitts) mit dem porösen Material erreicht.

Durch die durchdringende Verbindung wird insgesamt eine große Kontaktfläche zwischen den Stützabschnitten und den Dichtungsabschnitten, und damit eine sehr gute Anbindung der Dichtungsabschnitte an den Stützabschnitten, erreicht. Zudem kann das poröse Material vorab in die entsprechende Form, beispielsweise durch Stanzen oder Schneiden, gebracht werden, so dass ein aufwändiges Mehrkomponenten-Spritzgussverfahren zum Verbinden von Dichtungsabschnitt und Stützabschnitt nicht mehr nötig ist. Anders als beispielsweise bei Kunststoffrahmen/Polymerrahmen als Stützelement sind ferner keine mechanischen Hinterschnitte/Bohrungen im Rahmen/Stützabschnitt nötig, in denen das abdichtende Material hinterkrallen oder eingreifen kann. Weiterhin ist die Wahrscheinlichkeit für einen Materialverzug durch einen Stanz- oder Schneideprozess minimiert, wodurch eine automatisierte Zuführung im weiteren Verarbeitungsprozess vereinfacht wird.

Gemäß einer Ausführungsform umfasst das abdichtende Material ein Elastomer.

Solche Elastomere stellen aufgrund ihrer Materialeigenschaften eine gute Dichtwirkung zur Verfügung. Die oben angesprochenen Probleme der Biegeschlaffheit können durch die Anbindung an das poröse Material des Stützabschnitts überwunden werden.

Gemäß einer weiteren Ausführungsform ist die Zelldichtung flächig ausgestaltet.

Der Stützabschnitt und der Dichtungsabschnitt bilden somit eine im Wesentlichen gemeinsame Ebene bzw. erstrecken sich in einer gemeinsamen Ebene. Der Stützabschnitt stellt dabei der Zelldichtung als Ganzes eine ausreichende mechanische Steifigkeit bereit, so dass die Zelldichtung einfach, insbesondere auch maschinell, beim Zusammenbau in eine Brennstoffzelle eingesetzt werden kann. Dieser Aufbau sorgt dafür, dass ein an sich biegeschlaffes Dichtungsmaterial dennoch in einer flächigen bzw. ebenen Form (oder einer anderen gewünschten und von dem Stützabschnitt vorgegebenen Form) gehalten wird und mit den weiteren Zellkomponenten positioniert werden kann.

Gemäß einer weiteren Ausführungsform ist der Stützabschnitt umlaufend an einem Rand der Zelldichtung angeordnet.

Durch eine solche Anordnung kann die gesamte Fläche innerhalb des Stützabschnitts für den Dichtungsabschnitt verwendet werden, was eine maximale Designfreiheit für den Dichtungsabschnitt bereitstellt.

Gemäß einer weiteren Ausführungsform nimmt der Stützabschnitt in einer Draufsicht mindestens 80 % der Fläche der Zelldichtung ein. Das abdichtende Material des Dichtungsabschnitts ist an einer abzudichtenden Position in das poröse Material des Stützabschnitts eingespritzt und durchsetzt einen entsprechenden Abschnitt des porösen Materials.

Da das abdichtende Material des Dichtungsabschnitts mit dem Stützabschnitt, wie oben beschrieben, in einer durchdringenden Weise verbunden ist, kann der Stützabschnitt auch über einen Großteil der Fläche der Zelle (inklusive Dichtbereiche und Verteilerkonturen) bzw. der Zelldichtung vorhanden sein. Bevorzugt nimmt der Stützabschnitt mindestens 60 % der Fläche der Zelldichtung (bzw. der Zelle in eingebautem Zustand) ein. Weiter bevorzugt nimmt der Stützabschnitt mindestens 70 % der Fläche ein. Noch weiter bevorzugt nimmt der Stützabschnitt mindestens 80 % der Fläche ein. Am meisten bevorzugt nimmt der Stützabschnitt mindestens 90 % der Fläche ein. Insbesondere kann der Stützabschnitt auch die gesamte Fläche der Zelldichtung einnehmen. Dabei ist zu beachten, dass mit der gesamten Fläche der Zelle bzw. Zelldichtung selbstverständlich lediglich die Bereiche gemeint sind, an denen auch irgendeine Komponente der Zelldichtung vorhanden ist. Insbesondere ist damit somit nicht gemeint, dass eine homogen durchgängige Fläche der Zelldichtung mit dem Stützabschnitt bedeckt ist. Beispielsweise ist an den Durchgängen der Verteilerkanäle der Brennstoffzelle oder im elektrokatalytisch aktiven Bereich der Zellfläche kein Stützabschnitt vorhanden, um die normale Funktionsweise der Brennstoffzelle zu gewährleisten.

Durch die großflächige Anwendung des Stützabschnitts kann eine maximale Versteifung/Verstärkung erreicht werden. Der Dichtungsabschnitt oder die Dichtungsabschnitte können dann an den abzudichtenden Bereichen mit dem Stützabschnitt verbunden sein.

Gemäß einer Ausführung umfasst das poröse Material ein Gewebe

Gemäß einer weiteren Ausführungsform ist das Gewebe ein Glasfaser-Gewebe.

Gemäß einem zweiten Aspekt wird eine Brennstoffzelle bereitgestellt. Die Brennstoffzelle umfasst eine erste Bipolarplatte, eine zweite Bipolarplatte, eine Membran und eine Zelldichtung gemäß einer der vorstehend beschriebenen Ausführungsformen. Die Membran ist zwischen der ersten Bipolarplatte und der zweiten Bipolarplatte angeordnet. Die Zelldichtung ist zwischen der ersten Bipolarplatte und der zweiten Bipolarplatte angeordnet.

Die Zelldichtung kann gemäß jeder der hierin beschriebenen Ausführungsformen ausgestaltet sein und dient der Abdichtung gegen Leckagen zwischen der Anodenseite und der Kathodenseite der Brennstoffzelle sowie der Verteilerzuleitungen.

Gemäß einem dritten Aspekt wird ein Verfahren zum Herstellen einer oben beschriebenen Zelldichtung bereitgestellt. Das Verfahren umfasst das Stanzen oder Schneiden des porösen Materials, so dass das poröse Material den Stützabschnitt bildet, das Einlegen des porösen Materials in ein Formwerkzeug, das eine Negativform des Dichtungsabschnitts aufweist, das Halten des porösen Materials in dem Formwerkzeug, das Einbringen des abdichtenden Materials in das Formwerkzeug, und das Aushärten der Zelldichtung in dem Formwerkzeug.

Wie weiter oben angedeutet, kann die Zelldichtung der vorliegenden Offenbarung in einfacher und kostengünstiger Weise hergestellt werden. Dazu wird zunächst eine entsprechende Form der Stützabschnitte aus einem porösen Material gestanzt. Dieses gestanzte poröse Material kann dann als Einleger in ein entsprechendes Formwerkzeug manuell oder automatisiert eingelegt werden und muss insbesondere nicht in einem komplizierten Mehrkomponenten-Spritgussverfahren als Vorspritzling gefertigt werden. Das Formwerkzeug weist eine Negativform der herzustellenden Zelldichtung auf. Insbesondere weist das Formwerkzeug entsprechende Kavitäten der mit Bezug auf die Zelldichtung beschriebenen Dichtungsabschnitte auf. Das gestanzte poröse Material kann mit jeder geeigneten Methode in dem Formwerkzeug gehalten werden. Das poröse Material kann dabei beispielsweise in dem Formwerkzeug an entsprechenden Punkten eingeklemmt werden, oder durch ein Vakuum in der Form gehalten werden. Diese Aufzählung ist jedoch lediglich beispielhafter Natur und andere Methoden sind ebenfalls denkbar. Das Einbringen des abdichtenden Materials kann beispielsweise durch Einspritzen / Spritzguss erfolgen. Durch das Einspritzen des abdichtenden Materials in das Formwerkzeug kann dieses das poröse Material bzw. die Hohlräume des Stützabschnitts zumindest teilweise auffüllen und dabei die feste Matrix umgeben. Nach dem Aushärten entsteht so eine feste Verbindung zwischen dem porösen Material des/der Stützabschnitte und dem abdichtenden Material des/der Dichtungsabschnitte. Das abdichtende Material kann insbesondere ein Elastomer-Material, jedoch auch jedes andere Material sein, das eine Abdichtung eines Fluidstroms bereitstellt. Das poröse Material des Stützabschnitts kann jedes geeignete poröse Material sein, das eine ausreichende Steifigkeit zur mechanischen Versteifung der Zelldichtung zur Verfügung stellt.

Das verwendete poröse Material des Stützabschnitts sollte dabei selbst eine gewisse Kompressibilität aufweisen, um ein Abdichten des Formwerkzeugs während des Spritzvorgangs zu ermöglichen und, beispielsweise, zu ermöglichen, dass ein niedrig-viskoses Elastomer auf die gewünschten Bereiche im Formwerkzeug beschränkt wird.

Gemäß einer Ausführungsform erfolgt das Halten des gestanzten porösen Materials in dem Formwerkzeug durch Erzeugen eines Vakuums in dem Formwerkzeug.

Das Formwerkzeug kann dazu einen Vakuumanschluss aufweisen, so dass in oder hinter dem eingelegten gestanzten porösen Material ein Vakuum erzeug werden kann, welches das poröse Material an dem Formwerkzeug hält.

Gemäß einer weiteren Ausführungsform umfasst das Einlegen des gestanzten porösen Materials in das Formwerkzeug das Einlegen des porösen Materials in ein Formwerkzeug mit mindestens einer lokalen Stützstruktur, welche das poröse Material beabstandet zu Innenwänden des Formwerkzeugs hält. Das Halten des porösen Materials wird durch die lokale Stützstruktur erreicht, so dass beim nachfolgenden Einspritzen des abdichtenden Materials Dichtungsabschnitte auf beiden Seiten des porösen Materials ausgebildet werden.

Bei dieser Ausführungsform wird das poröse Material in dem Formwerkzeug beispielsweise durch entsprechende lokale Stützstrukturen in den Formhälften des Formwerkzeugs beabstandet zu den Innenwänden des Formwerkzeugs gehalten. Dadurch kann das abdichtende Material das poröse Material beim Einspritzen so durchdringen, dass es aus der anderen Seite wieder aus dem poröse Material austritt und so auf beiden Seiten der Ebene des Stützabschnitts Dichtungsabschnitte ausbilden. Dies ermöglicht insbesondere auch die Verwendung eines Stützabschnitts, welcher einen Großteil der Fläche der Zelldichtung um die aktive Zellfläche einnimmt und somit zu einer maximalen Versteifung der Dichtkontur und einer Minimierung der Menge an verwendetem Dichtmaterial beiträgt. Die Verwendung eines porösen Materials als Stützabschnitt(e) erleichtert dabei insbesondere ein solches beidseitiges Anspritzen des abdichtenden Materials, da das Material lediglich von einer Seite des Formwerkzeugs eingespritzt werden muss. Kompliziert aufgebaute Formwerkzeuge sind somit nicht nötig. Weiterhin wird über diese Ausführungsform die Genauigkeit der Anordnung der Dichtstrukturen relativ zueinander und zu den weiteren Bauteilkonturen dadurch erhöht, dass durch die Anbindung der Dichtstrukturen an eine feste Kontur eine Bewegung der Dichtkonturen deutlich eingeschränkt wird. Ursächlich für diese Bewegung können beispielweise die Biegeschlaffheit der Dichtmaterialien an sich, eine Absorptionseffekte, Wärmeausdehnung, Alterungs- oder Aushärtungseffekte sein.

Zusammenfassend wird durch die Erfindung also eine Zelldichtung für Brennstoffzellen zur Verfügung gestellt, die einfach, insbesondere maschinell, beim Zusammenbauen der Brennstoffzelle einzubauen ist, indem die Biegeschlaffheit reduziert wird. Durch die Verwendung von porösen Materialien als Stützstruktur ist die Herstellung beidseitiger Dichtstrukturen in einem Prozessschritt möglich, wobei sich die Stützstrukturen einfach herstellen lassen und eine sehr gute mechanische Anbindung an die Dichtstruktur gewährleisten. Komplizierte Mehrkomponenten-Spritzgussverfahren sind zudem zur Herstellung der Dichtung nicht mehr nötig, da die Stützabschnitte beim Spritzen der Zelldichtung bzw. der Dichtungsabschnitte der Zelldichtung als vorproduzierte Einleger manuell oder automatisiert eingelegt werden können und nicht vorgespritzt werden müssen. Bei Kunststoffrahmen als mechanische Stützen für Dichtungen ist dies u.a. aufgrund der verschiedenen Wärmedehnungen der Materialien, welche zu einem Verzug führen, schwer möglich. Zudem wird durch die Verwendung des porösen Materials eine gute Anbindung der Dichtungsabschnitte auf den Stützabschnitten erreicht, ohne die Schwierigkeiten bei der Anbindung eines Elastomer-Materials an ein Kunststoffmaterial.

Dies wird insbesondere durch die Porosität des Materials erreicht. Das offenbarte Dichtungskonzept ermöglicht zudem eine sehr hohe Designfreiheit sowie eine Reduzierung der Kosten des Herstellungsverfahrens sowohl der Zelldichtung als auch der Brennstoffzelle selbst. Der Rahmen aus porösen Material kann einfach maschinell in das Formwerkzeug eingelegt werden und verleiht der Zelldichtung eine mechanische Verstärkung, so dass auch die Zelldichtung einfach beim Zusammenbauen in die Brennstoffzelle eingebaut werden kann. Dadurch wird insbesondere eine Großserienfertigung deutlich erleichtert. Durch die Verwendung einer großflächigen Stützstruktur wird außerdem kostspieliges Dichtungsmaterial eingespart und dadurch Kosten und Gewicht des Dichtungsbauteils reduziert. Weiterhin wird die Positioniergenauigkeit der Dichtkonturen durch die Anbringung an ein festes Material mit Abstützwirkung erhöht.

### KURZBESCHREIBUNG DER FIGUREN

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: Eine schematische Draufsicht auf eine Konfiguration einer Zelldichtung für eine Brennstoffzelle.
- **Fig. 2**: Eine Querschnittsansicht der Zelldichtung aus Fig. 1.
- **Fig. 3**: Eine schematische Draufsicht auf eine andere Konfiguration einer Zelldichtung für eine Brennstoffzelle.
- **Fig. 4**: Eine Querschnittsansicht der Zelldichtung aus Fig. 3.
- **Fig. 5**: Eine schematische Schnittdarstellung als Explosionsansicht einer Brennstoffzelle mit zwei Zelldichtung gemäß den Fig. 1 bis 4.
- **Fig. 6**: Ein Flussdiagramm eines Verfahrens zum Herstellen einer Zelldichtung.

### DETAILLIERTE BESCHREIBUNG VON AUSFÜHRUNGSFORMEN

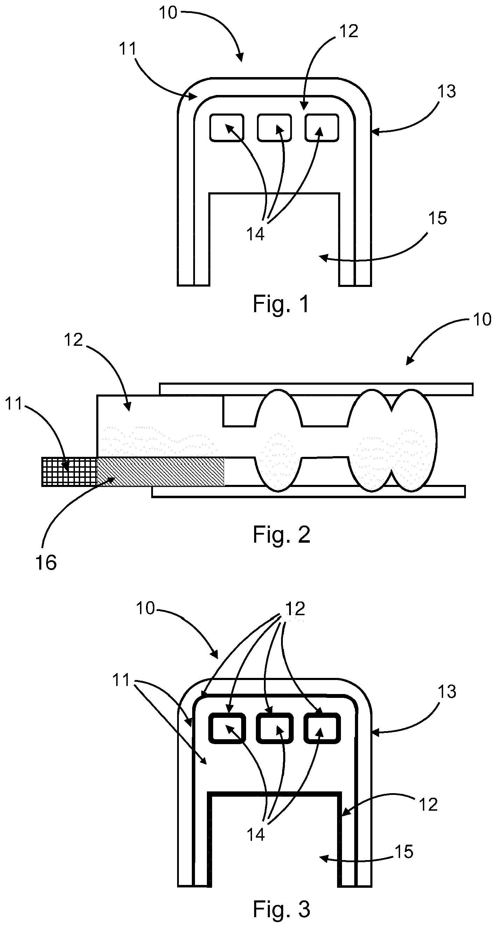

Fig. 1 zeigt eine beispielhafte Konfiguration einer Zelldichtung 10 in einer Draufsicht. Die Fig. 2 zeigt eine Schnittdarstellung der Zelldichtung 10 aus Fig. 1. Im Folgenden werden die Fig. 1 und 2 deshalb zusammen beschrieben. Die Zelldichtung weist drei Durchgangsöffnungen/Verteileröffnungen 14 auf, welche beispielsweise einem Durchtritt von Kühlflüssigkeit und der Reaktionsgase durch die Brennstoffzelle bzw. zwischen einzelnen Brennstoffzellen in einem Brennstoffzellenstapel dienen, und eine Membranöffnung 15, welche je nach verwendeter Brennstoffzelle in bekannter Weise einen Durchgang von positiven oder negativen Ionen durch eine Membran der Brennstoffzelle ermöglichen. Die Zelldichtung weist einen Stützabschnitt 11 auf, welcher an einem äußeren Rand 13 der Zelldichtung 10 verläuft und den äußeren Rand der Zelldichtung 10 bildet, und einen zusammenhängenden Dichtungsabschnitt 12, welcher mit dem Stützabschnitt 11 verbunden ist.

Der Stützabschnitt 11 umfasst ein poröses Material, wie beispielsweise ein Glasfaser-Gewebe, welches aus einzelnen miteinander verflochtenen Fasern oder Fasersträngen besteht. Zwischen den Fasern sind Zwischenräume ausgebildet, in welchen kein Gewebematerial vorhanden ist. Der Dichtungsabschnitt 12 wiederum umfasst ein abdichtendes, evtl. mit Dichtstrukturen (z.B. Dichtlippen) strukturiertes Material, wie beispielsweise ein entsprechendes Elastomer, welches zumindest im Übergansbereich zumindest teilweise die Zwischenräume in dem Gewebe auffüllt (am besten sichtbar in Fig. 2) und so den Dichtungsabschnitt 12 mit dem Stützabschnitt 11 mechanisch verbindet. Durch die relativ große Kontaktfläche des abdichtenden Materials mit den einzelnen Fasern des Gewebes wird eine gute Anbindung des Dichtungsabschnitts 12 and den Stützabschnitt 11 erreicht.

In der in den Fig. 1 und 2 dargestellten Konfiguration ist der Stützabschnitt 11 lediglich an dem Rand 13 der Zelldichtung 10 vorhanden. Der (hier zusammenhängende) Dichtungsabschnitt 12 wiederum wird von dem Stützabschnitt 11 gestützt, um der Zelldichtung 10 eine mechanischen Festigkeit zu verleihen (d.h. die Biegeschlaffheit der Zelldichtung, insbesondere des Dichtungsabschnitts 12, zu verringern). Im Stützabschnitt 11 können zum Beispiel auch Elemente eingebracht werden, um die Zelldichtung gegenüber den weiteren Zellkomponenten positionieren zu können. Dies erleichtert die automatisierte maschinelle Montage der Zelldichtung 10 in der Brennstoffzelle. Obwohl der Dichtungsabschnitt 12 in Fig. 1 als zusammenhängender homogener Bereich dargestellt ist, sollte beachtet werden, dass der Dichtungsabschnitt 12 auch entsprechende Konturen/Strukturen aufweisen kann, um die Dichtwirkung zu verbessern. Dies ist in Fig. 2 mit den einzelnen in Kontakt mit anliegenden Platten stehenden Bereichen (zum Beispiel Dichtlippen) angedeutet. In Fig. 2 ist zudem sichtbar, dass der Stützabschnitt lediglich an einer Oberfläche der Zelldichtung 10 vorhanden ist. Eine solche Ausgestaltung erlaubt beispielsweise, dass der Stützabschnitt 11 bei der Fertigung in einem Formwerkzeug durch ein Vakuum gehalten wird. In einer weiteren Ausprägung kann der Stützabschnitt aber auch mittig oder auf der gegenüberliegenden Seite angebracht werden. In Fig. 2 ist zudem ein mit dem abdichtenden Material dursetzter Bereich 16 des Stützabschnitts schematisch dargestellt. An diesem Bereich durchdringt das abdichtende Material den Stützabschnitt zumindest teilweise und schafft so eine Verbindung des Dichtungsabschnitts 12 mit dem Stützabschnitt 11. Der durchsetzte Bereich 16 entspricht somit einem Bereich des Stützabschnitts 11, in welchen das abdichtenden Material eingebracht/eingespritzt ist.

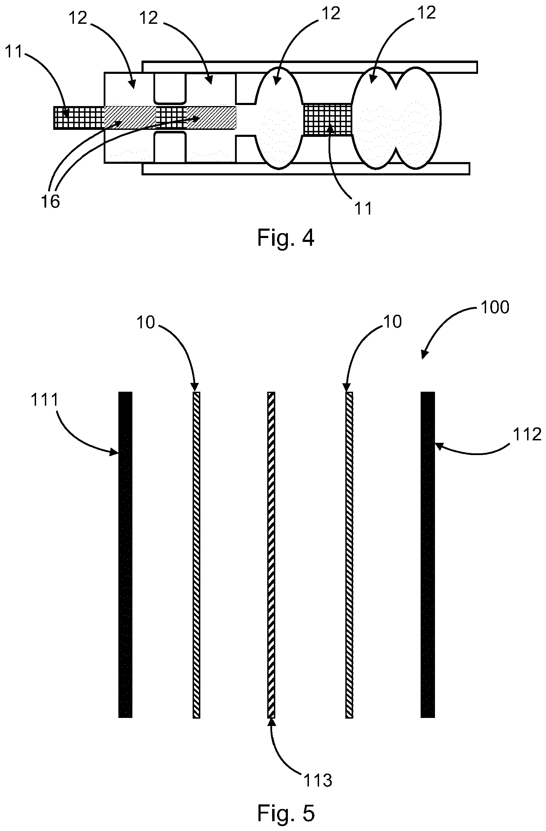

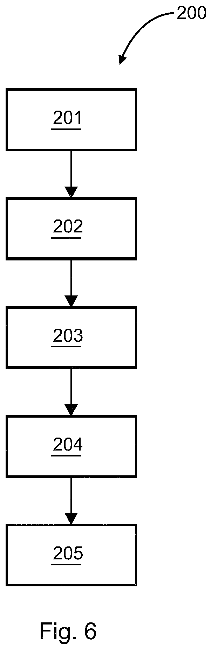

Die Fig. 3 und 4 zeigen schematisch eine alternative Ausgestaltung der Zelldichtung 10. Die Fig. 3 zeigt die Zelldichtung 10 wiederum in einer Draufsicht, während die Fig. 4 eine Schnittdarstellung der Zelldichtung 10 der Fig. 3 ist. Im Folgenden werden die Fig. 3 und 4 zusammen beschrieben. Die Zelldichtung 10 umfasst einen Stützabschnitt 11 und mehrere Dichtungsabschnitte 12, sowie wiederum Verteileröffnungen/Kühlmittelöffnungen 14 und eine Membranöffnung 15. Im Gegensatz zur Konfiguration der Fig. 1 und 2, ist der Stützabschnitt 11 in den Fig. 3 und 4 großflächiger an sämtlichen Bereichen der Zelldichtung 10 (natürlich mit Ausnahme der Verteileröffnungen 14 und Membranöffnung 15) vorhanden und dient als mechanische Verbindung zwischen den ansonsten unabhängigen Dichtbereichen 14. Die mehreren Dichtungsabschnitte sind in der dargestellten Ausgestaltung entsprechende Dichtlippen um die Öffnungen 14 und 15, um diese Bereiche in bekannter Weise abzudichten. Zudem umgibt einer der Dichtungsabschnitte 12 die gesamte Zellfläche. Die Dichtungsabschnitte 12 können wiederum entsprechende Strukturen aufweisen (sichtbar in Fig. 4). In der Ausgestaltung der Fig. 3 und 4 ist der Stützabschnitt nicht lediglich an einer Oberfläche der Zelldichtung 10 vorhanden, sondern zentral in der Zelldichtung 10 zwischen deren beiden Oberflächen angeordnet. Da das poröse Material des Stützabschnitts 11 porös ist, kann das abdichtende Material der Dichtungsabschnitte 12 bei der Produktion der Zelldichtung 10 leicht durch das poröse Material gespritzt werden und bildet so die Dichtungsabschnitte 12 auf beiden Seiten der Zelldichtung 10 aus, wie weiter unten mit Bezug auf Fig. 6 beschrieben wird. Auch in Fig. 4 sind, ähnlich wie in Fig. 2, durchsetzte Bereiche 16 des Stützabschnitts 11, in denen das abdichtende Material den Stützabschnitt 11 durchdringt, schraffiert dargestellt. An diesen Bereiche ist der Dichtungsabschnitt 12 somit an den Stützabschnitt in durchdringender Weise gebunden. Ebenfalls sichtbar ist in den Fig. 3 und 4, dass das Dichtungsmaterial nicht nur durch das poröse Material durchgespritzt werden kann, sondern auch in Aussparungen des Stützmaterials eingebracht werden kann oder auch dazu dient, unterschiedliche Bereiche des Stützmaterials miteinander zu verbinden. Dies ist insbesondere in Fig. 4 durch den mittleren Dichtungsabschnitt 12 sichtbar, welcher zwischen zwei Stützabschnitten 11 liegt.

Die Ausgestaltung der Fig. 3 und 4 ermöglicht eine besonders gute mechanische Versteifung der Zelldichtung 10, da die Stützabschnitte großflächig über die gesamte Zelldichtung 10 vorhanden sind. Zudem wird durch die Beschränkung der Dichtungsabschnitte 12 auf die abzudichtenden Bereiche (z.B. Öffnungen 14, 15) eine besonders leichtgewichtige Dichtung mit großer Materialeinsparung, insbesondere bei dem Dichtungsmaterial, bereitgestellt.

Die Zelldichtungen 10 sowohl der Fig. 1 und 2, als auch der Fig. 3 und 4 stellen (beispielsweise gegenüber reinen Dichtungen ohne Verstärkung aber auch gegenüber Dichtungen mit Kunststoffrahmen) sehr ebene/flache Dichtungen zur Verfügung, die gut positioniert werden können. Dadurch wird das Handling beim Einbau, insbesondere in der maschinellen und automatisierten Fertigung, erleichtert und die Fertigungskosten aufgrund der einfacheren nötigen Werkzeuge gesenkt.

Die Fig. 5 zeigt eine schematische Darstellung einer Brennstoffzelle 100 mit zwei Zelldichtungen gemäß den Fig. 1 bis 4 in einer Explosionsansicht. Eine Membran 113 ist zwischen zwei Bipolarplatten 111, 112 angebracht, welche bei einer einzelnen Brennstoffzelle 100 der Anode und der Kathode entsprechen. Zwischen der ersten Bipolarplatte 111 und der Membran 113 ist eine erste Zelldichtung 10 angebracht. Zwischen der zweiten Bipolarplatte 112 und der Membran ist eine zweite Zelldichtung 10 angebracht. Die Zelldichtungen 10 dienen dazu, die Anodenseite und die Kathodenseite sowohl gegeneinander als auch gegenüber des Zelläußeren gegen Leckagen abzudichten.

Die Fig. 6 stellt ein Flussdiagramm eines Verfahrens 200 zum Herstellen einer Zelldichtung (beispielsweise der Zelldichtung 10 aus den Fig. 1 bis 4) gemäß der vorliegenden Offenbarung dar.

Das Verfahren beginnt bei Schritt 201 mit dem Stanzen oder Schneiden eines porösen Materials, so dass das poröse Material einen Stützabschnitt 11 bildet. Das poröse Material kann dabei ein beliebiges geeignetes poröses Material sein, welches eine mechanische Versteifung bereitstellt. Beispielsweise kann das poröse Material ein Glasfaser-Gewebe sein. Dies ist jedoch nur beispielhaft und andere Materialien sind ebenfalls möglich. Das poröse Material ist ein Rohling, der entsprechend ausgestanzt oder geschnitten wird, um die benötigte Kontur/Form (beispielsweise die in den Fig. 1 bis 4 dargestellten Formen) aufzuweisen. Dabei ist jedoch zu beachten, dass das poröse Material eine gewisse Kompressibilität aufweisen sollte, um das Formwerkzeug in den nachfolgenden Schritten ausreichend abzudichten, so dass das abdichtende Material, welches üblicherweise beispielsweise ein niedrig-viskoses Elastomer ist, auf die zu spritzende Kontur beschränkt wird.

Nach Schritt 201 wird das gestanzte poröse Material in Schritt 202 in ein Formwerkzeug eingelegt. Das Formwerkzeug weist eine Negativform der herzustellenden Zelldichtung 10, d.h. insbesondere Kavitäten mit der Form des Dichtungsabschnitts 12 auf, so dass beim Einspritzen des abdichtenden Materials die Dichtungsabschnitte 12 ausgebildet werden.

In Schritt 203 wird das poröse Material in dem Formwerkzeug gehalten. Dies kann beispielsweise durch ein Vakuum erfolgen. Es ist jedoch auch möglich, dass lokale Stützstrukturen das poröse Material von den Innenwänden des Formwerkzeugs beabstandet halten und einklemmen. So ist beispielsweise das Ausbilden einer Zelldichtung 10 gemäß den Fig. 3 und 4 möglich, bei welcher der Stützabschnitt 11 in der Mitte der Zelldichtung 10 verläuft und die Dichtungsabschnitte 12 auf beiden Seiten der Zelldichtung 10 ausgebildet sind.

In Schritt 204 wird das abdichtende Material in das Formwerkzeug eingebracht, beispielsweise durch Einspritzen, und in Schritt 205 ausgehärtet, um die fertiggestellte Zelldichtung 10 zu bilden. Beim Einspritzen durchdringt das abdichtenden Material das poröse Material des Stützabschnitts wie hierin weiter oben beschrieben. Beim Aushärten entsteht so eine gute Anbindung zwischen dem/den Dichtungsabschnitt/en 12 und dem/den Stützabschnitt(en) 11. Wenn das poröse Material in Schritt 202 in ein Formwerkzeug mit lokalen Stützstrukturen, welche das poröse Material von den Innenwänden des Formwerkzeugs beabstandet halten, eingelegt wird, kann das abdichtende Material beim Einspritzen in Schritt 204 das poröse Material von der Einspritzseite durchdringen und auf der anderen Seite wieder austreten, um so Dichtungsabschnitte 12 auf beiden Seiten der Zelldichtung auszubilden.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 10: Zelldichtung
- 11: Stützabschnitt
- 12: Dichtungsabschnitt
- 13: Rand
- 14: Verteileröffnungen/Kühlmittelöffnungen
- 15: Membranöffnung
- 16: mit abdichtendem Material durchsetzter Bereich des Stützabschnitts

- 100: Brennstoffzelle
- 111: erste Bipolarplatte
- 112: zweite Bipolarplatte
- 130: Membran

- 200: Verfahren
- 201: Stanzen oder Schneiden
- 202: Einlegen
- 203: Halten
- 204: Einspritzen
- 205: Aushärten

## Patentansprüche

1. Zelldichtung (10) für eine Brennstoffzelle (100), umfassend:
einen Stützabschnitt (11); und
einen Dichtungsabschnitt (12);
wobei der Dichtungsabschnitt (12) ein abdichtendes Material umfasst;
wobei das abdichtende Material konfiguriert ist, ein Durchtreten eines Fluids zu verhindern;
wobei der Stützabschnitt (11) ein poröses Material umfasst und konfiguriert ist, der Zelldichtung (10) eine mechanische Stabilität zu verleihen; und
wobei das abdichtende Material des Dichtungsabschnitts (12) das poröse Material zumindest teilweise durchdringt und so den Dichtungsabschnitt (12) mit dem Stützabschnitt (11) verbindet.

2. Zelldichtung (10) nach Anspruch 1, wobei das abdichtende Material ein Elastomer umfasst.

3. Zelldichtung (10) nach einem der vorstehenden Ansprüche, wobei die Zelldichtung (10) flächig ausgestaltet ist.

4. Zelldichtung (10) nach einem der vorstehenden Ansprüche, wobei der Stützabschnitt (11) umlaufend an einem Rand (13) der Zelldichtung (10) angeordnet ist.

5. Zelldichtung (10) nach Anspruch 3, wobei der Stützabschnitt (11) in einer Draufsicht mindestens 80 % der Fläche der Zelldichtung (10) einnimmt; und
wobei das abdichtende Material des Dichtungsabschnitts (12) an einer abzudichtenden Position in das poröse Material des Stützabschnitts (11) eingespritzt ist und einen entsprechenden Abschnitt des porösen Materials durchsetzt.

6. Zelldichtung (10) nach einem der vorstehenden Ansprüche, wobei das poröse Material ein Gewebe umfasst.

7. Zelldichtung (10) nach Anspruch 6, wobei das Gewebe ein Glasfaser-Gewebe ist.

8. Brennstoffzelle (100), umfassend:
eine erste Bipolarplatte (111) und eine zweite Bipolarplatte (112);
eine Membran (130); und
eine Zelldichtung (10) nach einem der vorstehenden Ansprüche;
wobei die Membran (130) zwischen der ersten Bipolarplatte (111) und der zweiten Bipolarplatte (112) angeordnet ist;
wobei die Zelldichtung (10) zwischen der ersten Bipolarplatte (111) und der zweiten Bipolarplatte (111) angeordnet ist.

9. Verfahren (200) zum Herstellen einer Zelldichtung (10) gemäß einem der Ansprüche 1 bis 7, umfassend:
Stanzen (201) oder Schneiden (201) eines porösen Materials, so dass das poröse Material den Stützabschnitt (11) bildet;
Einlegen (202) des gestanzten porösen Materials in ein Formwerkzeug, das eine Negativform des Dichtungsabschnitts (12) aufweist;
Halten (203) des porösen Materials in dem Formwerkzeug;
Einbringen (204) des abdichtenden Materials in das Formwerkzeug; und
Aushärten (205) der Zelldichtung (10) in dem Formwerkzeug.

10. Verfahren (200) nach Anspruch 9, wobei das Halten (203) des gestanzten porösen Materials in dem Formwerkzeug durch Erzeugen eines Vakuums in dem Formwerkzeug erfolgt.

11. Verfahren (200) nach einem der Ansprüche 9 oder 10, wobei das Einlegen (202) des gestanzten porösen Materials in das Formwerkzeug das Einlegen (202) des porösen Materials in ein Formwerkzeug mit mindestens einer lokalen Stützstruktur, welche das poröse Material beabstandet zu Innenwänden des Formwerkzeug hält, umfasst, und das Halten (203) des porösen Materials durch die lokale Stützstruktur erreicht wird, so dass beim nachfolgenden Einspritzen (204) des abdichtenden Materials Dichtungsabschnitte (12) auf beiden Seiten des porösen Materials ausgebildet werden.
